# EUROPEAN PATENT APPLICATION

(11) **EP 0 652 677 A2**
(43) Date of publication of application: **10.05.1995**
(21) Application number: 94308151.3
(22) Date of filing: 04.11.1994
(51) Int. Cl.: H04N 7/24

(54) **Terrestrial television broadcast system converter**

(30) Priority: 08.11.1993 GB 9322999
(71) Applicant: Digiverter Limited, London SW15 1HL (GB)
(72) Inventor: Foley, John Patrick, London, SW15 6PY (GB)
(74) Representative: Mounteney, Simon James

(57) **Abstract**

A terrestrial television broadcast converter comprises input means 2 for receiving a digital signal; a demodulator 4 for demodulating a received digital signal; a digital signal processor 6 for decompressing and demultiplexing a digital signal; a digital to analogue converter; and means for transmitting the signal to an analogue television receiver.

The converter enables an analogue television set to receive terrestrial digital television signals.

## Description

This invention relates to a terrestrial television broadcast system converter for use in conjunction with a television receiver. More particularly, but not exclusively, the invention relates to a converter for enabling a television receiver adapted to receive signals based upon the NTSC, PAL, SECAM or D2-MAC systems to be used in conjunction with a different television broadcasting system.

Terrestrial television broadcasts have conventionally been made in accordance with one of a number of broadcasting systems. The NTSC (National Television System Committee of the USA) system was adopted in the USA in 1953. It uses 525 picture lines and a 60 Hz field frequency. It has since been adopted in Canada, Mexico and Japan. SECAM (Séquentiel Couleur à Mémoire) was originally developed in France in 1959 and PAL (Phase Alternation by Line) was developed in Germany in 1962. These systems, which are now in use throughout most of the world, were designed to overcome some of the defects of NTSC (in particular the effect of differential phase distortion) and have been improved over the years. Both of these systems use 625 picture lines. A further system called D2-MAC has been adopted in a number of other European countries.

One thing which all of these systems have in common is that they are *analogue* systems. Analogue systems suffer from a number of drawbacks. For example, receivers can be susceptible to interference by sinusoidal signals and echo effects caused by transmission delays. In addition, analogue transmission makes inefficient use of the electromagnetic spectrum. These inadequacies have led to new terrestrial television transmission standards being agreed internationally. These new standards are based upon more efficient digital techniques.

Unfortunately, existing television receivers are not compatible with digital television transmission. This means that the implementation of a digital transmission standard would require consumers to purchase new digital television receivers before digital television broadcasts could be enjoyed. This is obviously undesirable, from the consumer's point of view.

The present invention, therefore, sets out to provide means for enabling a conventional analogue television receiver to receive terrestrial digital television broadcasts.

According to the invention there is provided a television signal converter comprising input means for receiving a digital signal; a demodulator, for demodulating a received digital signal; a digital signal processor, for decompressing and demultiplexing a digital signal; a digital to analogue converter; and means for transmitting the signal to an analogue television receiver.

Preferably the input means is a VHF/UHF tuner which may be of a phase locked loop type. Any other appropriate tuner may, however, be used.

In a preferred embodiment, the demodulator is a coded orthogonal frequency division multiplexing demodulator which implements fast Fourier transforms.

In a preferred embodiment, the demodulator supports from 2,000 to 8,000 carriers. Preferably the guard intervals range from 62.5 µs to 250 µs.

The digital signal processor may conveniently conform to the Motion Picture Experts Group No. 2 standard (MPEG2). This digital signal processor is used to decompress transmitted MPEG2 signals. In a preferred embodiment, the digital signal processor can decompress signals conforming to MPEG2 Main Level, Main Profile. Other embodiments may conform to different implementations of MPEG2, for example MPEG2 Main Level, High Profile to decode high definition television signals, or more television services.

Preferably the device further includes a modem for connection to a switched telephone network. In addition, the device may also include a second MPEG2 input port for connection to a second broadcast delivery system (e.g. cable, satellite), or to a telecommunications delivery system such as the public switched telephone network supporting ADSL transmission, or a fibre optic network supporting MPEG2 over ATM transmission.

Preferably a user interface is provided which may be implemented in a DRAM. The initial size of this DRAM may vary between 4 and 16 Megabits. In an alternative embodiment a higher level of DRAM may be provided. This may be controlled by programmable software. The software may be dynamically up-dated using a telecommunications network or the modem connection at the discretion of the consumer or service provider. The purpose of this is to dowine load new versions of the user interface, update control information or allow consumers to browse through interactive information services when these become available.

The device may further include a digital output in addition to its analogue output. This output may be an MPEG2 output.

It will be apparent that a converter according to the invention enables a standard analogue television receiver to be used in conjunction with a digital television broadcasting system. Furthermore, due to the construction of the device, which employs digital processing techniques, the system is particularly suitable for use in conjunction with a user interface, thus allowing direct user interaction and control. In addition the system can be used with the telephone network, thus allowing the selection of video on demand services via the same apparatus, connected to a suitably modified telephone jack equipped to handle both ADSL and PSTN services. It also greatly facilitates the provision of a telecommunications return loop, for interactive communications capable of supporting Video-on-demand services.

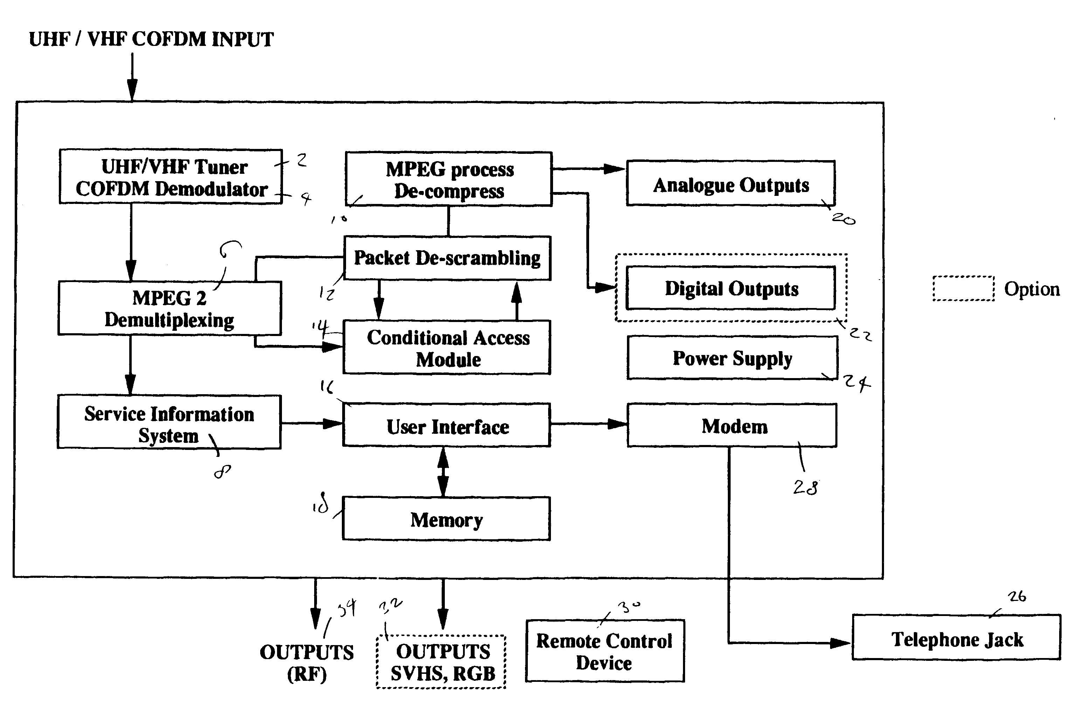

An embodiment of the invention will now be described by way of example and with reference to the accompanying drawings, in which Figure 1 is a block diagram of an embodiment of a converter according to the invention.

Referring to the drawing, the input for the device is a standard 75 ohm aerial connector to a phase locked loop or other suitable type of VHF/UHF tuner 2. In this particular case, the tuner is adapted to receive digital signals encoded in the Coded Orthogonal Frequency Division Multiplexing (COFDM) format, and compressed using the Motion Picture Experts Group No. 2 standard (MPEG2), using a number of MPEG2 profiles. It should be understood, however, that a tuner adapted to receive another multiplexing format or compression standard may be employed as an alternative e.g. to receive Main Profile, High Level for HDTV services.

The terrestrial signal is received via an external antenna, which may be provided on top of a television receiver or in some other location, such as a loft or on a rooftop.

From the tuner, the signal is directed to a COFDM demodulator 4, which is a digital signal processor or gate array which implements fast Fourier transforms in order to demodulate the received digital terrestrial television signal. The purpose of the Fast Fourier Transform is to implement a multi-carrier mechanism for transport of digital data in a hostile terrestrial transmission environment. This allows for digital data to be transported in a robust way using the multi-carrier scheme, by dividing the data up into much smaller pieces than would be possible in a single carrier transmission scheme, such as with adaptive equalisation.

The demodulator allows a variable number of COFDM carriers to be supported, ranging from 2,000 carriers, through to at least 8,000 carriers. These ranges correspond respectively to fast Fourier transform sizes of 2560 and 10240. If desired a demodulator supporting a higher number of carriers (e.g. up to 16,000) can be used. This would, in principle, allow much higher data rates to be carried within the UHF television channel.

The range of carriers permits defined guard intervals ranging from 62.5 µs to at least 250 µs, thus allowing the receiver to acquire signals from both single frequency regional and single frequency national digital television networks, for example. Flexible use of guard intervals permit spectrum efficiency to be traded off against maximum data rate available within a particular region of a country. The reason for variable guard intervals is to allow maximum flexibility in the configuration of the transmitter network and associated frequencies. With the lower guard intervals of around 62.5 µs it is possible to have single frequency regional networks where all the digital television services carried in a particular frequency can be broadcast by all transmitters simultaneously in a particular region of the country. In the case of guard intervals of around 250 µs it is possible to operate single frequency national networks, in which all transmitting stations in a country broadcast on the same frequency which carries an ensemble of digital television programme services. The purpose of single frequency networks is to maximise use of available spectrum resources at national or regional level. In due course it may be possible to have an embodiment of the receiver with a guard interval dynamically reconfigurable between 62.5µs and 500µs.

After demodulation, the digital signals are passed to a MPEG2 qualified digital signal processor 6 which decompresses the signals and demultiplexes the required components contained in the bit stream. This enables individual television, audio or data services carried within the multiplex to be recovered on user selection.

From the digital signal processor 6 the decompressed and demultiplexed signal is directed to the service information system 8, which is a programmable digital signal processor which implements the specification of service information, in accordance with any suitable definition (e.g. as defined by ETSI in conjunction with the European Digital Video Broadcasting Group), or by any proprietary implementation. The outputs of the service information bit streams are passed to a user interface implemented in up to 16 MB of DRAM, which is controlled by programmable software. This software may be dynamically up-dated using the telecommunications network/modem connection 28 at the discretion of the consumer or service provider. The purpose of this is to downline load new versions of the user interface, update control information or allow consumers to browse through interactive information services when these become available. The purpose of the software is to make it easy for the consumer to navigate around the services and select options.

Under software control, the user can select individual channels and multiplex components within each channel. Each channel is passed through to the conditional access module 14.

The conditional access module 14 is a hardware processor which decrypts encrypted television services contained within each individual multiplex. It may be regulated by means of a conventional smart card which can be inserted into a slot in the front of its housing (not shown). The conditional access module 14 may optionally include an individually addressable tamper-proof chip set which allows full addressability to be implemented either through over-the-air broadcast addressing or through connection to the telephone network. The purpose of this is to increase the overall security of the system.

The converter contains a modem 28 for connection to the public switched telephone network, which may implement standard protocols such as V.21/V.22/V.31 bis.

Alternatively or additionally means may be provided for connection to digital ISDN, GSM, and/or PCN mobile communications networks. This allows the converter to provide interactive services to the consumer e.g. interactive television or information applications.

The modem may be configured for connection to exchanges equipped with Asymmetric Digital Subscriber line technology, if desired. Alternatively, a second MPEG2 input connector may be configured to allow direct connection of a VOD type service.

A standard mains power supply 24 is used to power the device (240V, 50Hz AC in the UK). A battery back-up is optional.

The converter is controlled by a universal remote control device 30 which also controls a TV and a VCR (if one is connected). The purpose of the universal remote control is to simplify the integration of the converter with the existing home audio-visual infrastructure. As an alternative, the device may be controlled by a mouse or a joystick. The converter may, of course, be controlled by its own remote control which does not affect any other device.

The converter further includes a modulated RF output 34 which is user selectable in the range UHF channels E21-69, optional S-VHS outputs, and an RGB/CVBS output, which is provided via a peritel or SCART connector. The device also includes two digital outputs and an MPEG2 output for connection to a digital VCR or digital display device and a Small Computer Standard Interface (SCSI) for connection to a personal computer, printer or digital media player (such as CD-ROM). The purpose of these digital outputs is to increase the functionality of the converter and enable other peripherals to be connected. In particular the purpose of the analogue outputs is to provide the required signal which can be processed by an analogue television receiver in the normal way. In the case of the digital MPEG2 output, this output may be used to feed either a digital VCR or a digital TV set.

Many further modifications and variations will become apparent to those versed in the art upon reference to the foregoing. It is, however, to be understood that the invention is not limited to the embodiments described, but that the scope of the invention is determined rather by the appended claims.

## Claims

1. A television signal converter comprising one or more input means for receiving a digital signal; a demodulator, for demodulating a received digital signal; a digital signal processor, for decompressing and demultiplexing a digital signal; a digital to analogue converter; and means for transmitting the signal to an analogue television receiver.

2. A television signal converter in accordance with Claim 1, wherein the input means or one of the input means is a VHF/UHF tuner.

3. A television signal converter according to Claim 2, wherein the tuner is a phase locked loop tuner.

4. A television signal converter according to any preceding claim, wherein the demodulator is a coded orthogonal frequency division multiplexing demodulator, which implements fast Fourier transforms.

5. A television signal converter according to any preceding claim, wherein the demodulator supports 2,000 or more carriers.

6. A television signal converter according to Claim 5, wherein the demodulator supports 8000 or less carriers.

7. A television signal converter according to any preceding claim, wherein the digital signal processor conforms to Motion Picture Experts Group No. 2 standard.

8. A television signal converter according to any preceding claim, comprising a modem for connection to a switched telephone network.

9. A television signal converter according to any preceding claim, comprising a user interface.

10. A television signal converter according to Claim 8, wherein the user interface is implemented in a DRAM.

11. A television signal converter according to Claim 9 or 10, wherein the user interface is controlled by programmable software.

12. A television signal converter according to Claim 11, wherein the software is dynamically up-dated using a telecommunications network, to which the converter is connected.

13. A television signal converter according to any preceding claim, adapted to receive and process video signals and comprising means for enabling a user to select individual signals for viewing.

14. A television signal converter substantially as hereinbefore described with reference to the accompanying drawings.

15. A method of broadcasting a television signal comprising the steps of
(i) transmitting a terrestrial digital signal;
(ii) receiving the terrestrial digital signal;
(iii) converting the terrestrial digital signal to an analogue signal using a television signal converter in accordance with any one of Claims 1 to 13;
(iv) feeding the analogue signal to an analogue television receiver.

16. A method according to Claim 15, comprising the additional step of feeding a digital signal to another digital device for subsequent processing.

17. A method of broadcasting a television signal substantially as hereinbefore described with reference to the accompanying drawing.
